# EUROPÄISCHE PATENTSCHRIFT

(11) **EP 0 408 827 B1**
(45) Veröffentlichungstag und Bekanntmachung des Hinweises auf die Patenterteilung: **24.08.1994**
(21) Anmeldenummer: 90103434.8
(22) Anmeldetag: 22.02.1990
(51) Int. Cl.: F16K 41/02, F16C 33/78

(54) **In einer Bohrung eines Maschinenteiles festlegbare Dichtung**
Fixing of a seal in a boring of an engine part
Fixation d'un joint dans un alésage d'un organe de machine

(30) Priorität: 15.07.1989 DE 3923494
(43) Veröffentlichungstag der Anmeldung: 23.01.1991
(73) Patentinhaber: Firma Carl Freudenberg, 69469 Weinheim (DE)
(72) Erfinder: Martsfeld, Reiner, D-6700 Ludwigshafen (DE); Schumacher, Herbert, D-6946 Gorxheimertal (DE)

(56) Entgegenhaltungen:
- US-A- 3 091 470
- US-A- 3 598 365
- US-A- 3 854 733
- US-A- 4 169 604
- US-A- 4 269 417

## Beschreibung

Die Erfindung betrifft eine Dichtungsanordnung, umfassend eine Dichtung, die in einer sich drehende Welle aufnehmenden Bohrung eines Maschinenteils festgelegt ist und einen flanschartig ausgebildeten Stützbund aufweist, an dem ein sich parallel zu der Dichtungsachse erstreckender Ansatz vorgesehen ist, der an die die Bohrung umschließende Stirnfläche des Maschinenteils angepreßt ist, wobei die Dichtung, der Stützbund und der Ansatz einstückig ineinander übergehend ausgebildet und aus polymerem Werkstoff erzeugt sind und wobei die Stirnfläche des Maschinenteils mit einer dem Ansatz hinsichtlich der Größe und der Form entsprechenden Ausnehmung versehen ist.

Eine solche Dichtungsanordnung ist aus der US-A-3,854,733 bekannt. Das Maschinenteil besteht aus einer Hülse, die eine stufenförmig abgesetzte Welle in einem Teilbereich ihrer axialen Erstreckung außenumfangsseitig anliegend umschließt. Die Welle ist mit einer sich umfangsseitig erstreckenden, nutförmigen Eintiefung versehen, die in axialer Richtung teilweise von der Hülse überdeckt ist. Die Dichtung weist einen im wesentlichen U-förmigen Querschnitt auf und umschließt die stirnseitige Begrenzung der Hülse. Die Hülse ihrerseits ist von einem weiteren Maschinenteil umschlossen, wobei das weitere Maschinenteil im Bereich der Stirnseite der Hülse mit dieser einen kreisringförmigen Spalt begrenzt. Innerhalb des Spaltes ist der sich parallel zu der Dichtungsachse erstreckende Ansatz der mit einem im wesentlichen U-förmigen Querschnitt versehenen Dichtung aufgenommen, wobei die Dichtung in radialer Richtung innenseitig zwischen der nutförmigen Vertiefung der Welle und der Hülse unter radialer Vorspannung dichtend angeordnet ist.

Eine weitere Dichtung ist aus der DE-C-916 918 bekannt. Der Stützbund besteht dabei aus metallischem Werkstoff und ist unabhängig von der aus polymerem Werkstoff bestehenden Dichtung erzeugt. Hierdurch ergibt sich ein erhöhter Herstellungsaufwand. Außerdem wird das wenig befriedigende Abdichtungsergebnis im Bereich der statischen Abdichtungszone zwischen der Stirnfläche und der Stirnfläche des Maschinenteils bemängelt.

Der Erfindung liegt die Aufgabe zugrunde, eine Dichtungsanordnung der eingangs genannten Art derart weiterzuentwickeln, daß bei vermindertem Herstellungsaufwand eine gute Abdichtwirkung im Bereich der statischen Abdichtzone zwischen dem Maschinenteil und dem Stützbund bei möglichst geringen Anpreßkräften und leichtgängiger Beweglichkeit des relativ beweglichen Maschinenteils gewährleistet ist.

Diese Aufgabe wird erfindungsgemäß mit den kennzeichnenden Merkmalen von Anspruch 1 gelöst. Auf vorteilhafte Ausgestaltungen nehmen die abhängigen Ansprüche Bezug.

Zur Lösung der Aufgabe ist es gemäß des kennzeichnenden Teils von Anspruch 1 vorgesehen, daß der Ansatz durch die durch einen Ringbund der Welle bewirkte Anpreßung in seinem Querschnitt erweitert und kraftschlüssig an der die Ausnehmung umschließenden Wandung festgelegt ist und daß der Stützbund mit einem weiteren, einstückig angeformten Ansatz versehen ist, der dem ersten Ansatz axial gegenüberliegt und den Ringbund berührt. Die Dichtung kann beispielsweise aus elastomerem Polyurethan oder Gummi bestehen.

Die Größe der effektiv zur Verfügung stehenden Dichtungsfläche ist durch die erfindungsgemäße Ausgestaltung der Dichtungsanordnung deutlich erweitert, was an sich bereits die Erzielung eines verbesserten Abdichtungsergebnisses bewirkt. Darüber hinaus ist es aber von entscheidender Bedeutung, daß der aus nachgiebigem Werkstoff bestehende Ansatz während der axialen Einpressung in die Ausnehmung nicht nur deren Stirnfläche mit einer erhöhten Anpressung berührt, sondern zusätzlich an die die Ausnehmung radial nach innen und nach außen begrenzenden Flächen mit einer gleichgroßen Kraft angepreßt ist. Die in den letztgenannten Bereichen auftretenden Kräfte sind von entgegengesetzter Richtung und heben sich dadurch gegenseitig auf. Für eine gute Festlegung der Dichtung an den Maschinenteil genügen dadurch vergleichsweise geringe Anpreßkräfte.

Im Gegensatz zu der aus nachgiebigem Werkstoff bestehenden Dichtung sind die den Ansatz im eingebauten Zustand berührenden Maschinenteile unnachgiebig gestaltet. Sie bestehen im allgemeinen aus Metall, wodurch die beim Einbau bewirkte, gegenseitige Verpressung des den Ansatz bildenden Werkstoffkörpers mit der Ausnehmung langfristig erhalten bleibt. Es sind auch Anwendungsfälle denkbar, in denen die Dichtung und damit zugleich der Ansatz aus einem durch das abzudichtende Medium quellbaren Werkstoff besteht. Die beim Einbau der Dichtung erzeugte gegenseitige Verpressung zwischen dem Ansatz und der Ausnehmung erfährt bei einer solchen Ausführung während des späteren Gebrauchs eine weitere Steigerung, was sowohl das Festlegungsals auch das Abdichtungsergebnis weiter verbessert. Um zu verhindern, daß der Stützbund während der Anpressung des Ansatzes durch einen Anpreßkörper eine Schädigung erfährt, hat es sich als vorteilhaft erwiesen, wenn der Stützbund auf der dem Ansatz axial gegenüberliegenden Seite mit einem weiteren Ansatz versehen ist. Bei einer ebenen Ausbildung des Andrückkörpers und der Stirnfläche ist der Stützbund in diesem Falle durch die Anpreßwirkung nicht belastet, was einem Abscheren vorbeugt.

Der Ansatz und die Ausnehmung sollen die Dichtungsachse zweckmäßig konzentrisch umschließen. Neben der vereinfachten Herstellung wird hierdurch dem Auftreten von Montagefehlern vorgebeugt.

Im Hinblick auf eine vereinfachte Montage hat es sich als zweckmäßig erwiesen, wenn der Ansatz in seinem der Ausnehmung zugewandten Bereich von geringfügig größerer Weite ist als die Ausnehmung. Sein Profil ist bei einer solchen Gestaltung zweckmäßig trapezförmig gestaltet.

Der weitere Ansatz kann von geringerer Länge in axialer Richtung sein als der Ansatz. Zweckmäßigerweise ist seine Breite in radialer Richtung wenigstens fünfmal so groß wie die Länge in axialer Richtung. Einer unerwünschten Labilität wird hierdurch vorgebeugt und eine sichere Übertragung der für die Erzielung eines guten Abdichtungsergebnisses und einer guten Festlegung des Ansatzes in der Ausnehmung erforderlichen Kräfte gewährleistet.

Der Gegenstand der Erfindung wird nachfolgend anhand der in der Anlage beigefügten Zeichnung weiter verdeutlicht:

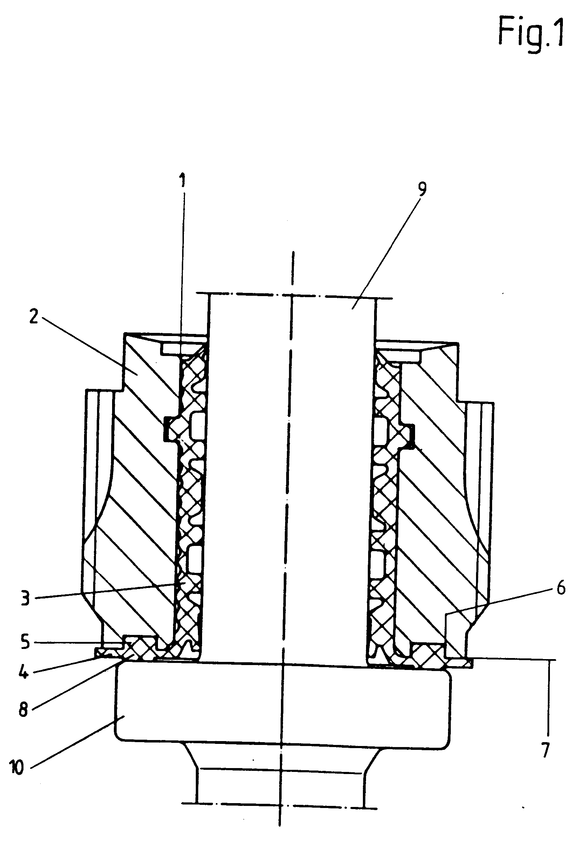

Die in Figur 1 dargestellte Dichtung 3 ist in einer Bohrung 1 eines Maschinenteils 2 statisch ruhend festgelegt und dient der Abdichtung und Führung der Gewindespindel 9 des Absperrschiebers einer Leitung für gasförmige Stoffe. Die Dichtung 3 besteht aus elastomerem Polyurethan und ist mit einem flanschartig ausgebildeten Stützbund 4 versehen, der in den Zwischenraum zwischen der Stirnfläche 7 des Maschinenteils 2 und dem Ringbund 10 der Gewindespindel 9 hineinragt. Er ist etwa im mittleren Bereich seiner radialen Erstreckung in axialer Richtung beiderseits mit Ansätzen 5, 8 versehen, welche einstückig angeformt sind. Beide Ansätze sind von einem im wesentlichen rechteckig begrenzten Profil und umschließen die Gewindespindel 9 konzentrisch. Der Ansatz 5 ist dabei in einer Ausnehmung 6 angepaßter Form und Größe der Stirnfläche 7 des Maschinenteils 2 aufgenommen. Er erfährt in der Ausnehmung 6 durch die elastische Aufweitung seines Querschnitts während der axialen Anpreßung des Ringbunds 10 der Gewindespindel 9 eine unverrückbare Festlegung. Die Begrenzungsflächen der Ausnehmung 6 bilden einen Bestandteil des unnachgiebig gestalteten Maschinenteils 2 und erfahren hierbei eine gute Abdichtung.

Der Stützbund 4 ist innerhalb der radialen Erstreckung der Ansätze 5, 8 infolge teilweiser Umschließung durch das unnachgiebige Maschinenteil 2 von besonders großer Robustheit. Er vermag dadurch erheblichen axialen Anpreßkräften des Ringbundes 10 problemlos zu widerstehen, was die Übertragung großer Schließkräfte ermöglicht. Dennoch ist eine gute Relativverdrehbarkeit der Gewindespindel stets und insbesondere nach langen Stillstandszeiten unter Einwirkung korrosiver Medien aufgrund der spezifischen Werkstoffeigenschaften des elastomeren Polyurethans der Dichtung 3 gewährleistet.

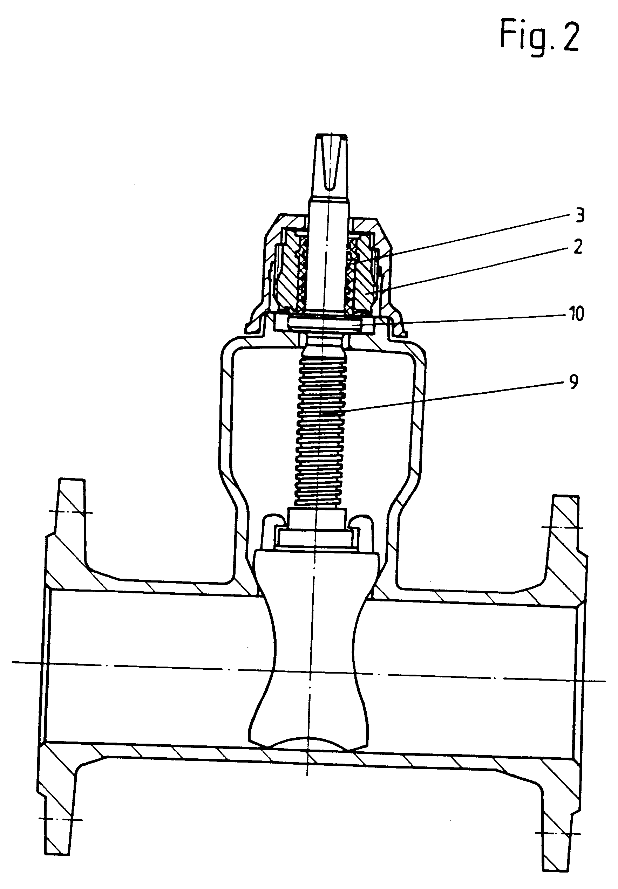

Figur 2 zeigt die vorstehend erläuterte Dichtung im eingebauten Zustand in einem Absperrschieber. Sie eignet sich für dieses Anwendungsgebiet besonders. In den radial außerhalb der Ansätze 5, 8 liegenden Zonen ist der Stützbund 4 keiner unmittelbaren Anpressung des Ringbunds 10 ausgesetzt. Die Gefahr des Abscherens bei einer Relativverdrehung der Gewindespindel 9 ist daher nicht gegeben und die zur Sicherung der Dichtung 3 erforderlichen Kräfte können problemlos übertragen werden.

## Patentansprüche

1. Dichtungsanordnung, umfassend eine Dichtung (3), die in einer eine sich drehende Welle (9) aufnehmenden Bohrung (1) eines Maschinenteils (2) festgelegt ist und einen flanschartig ausgebildeten Stützbund (4) aufweist, an dem ein sich parallel zu der Dichtungsachse erstreckender Ansatz (5) vorgesehen ist, der an die die Bohrung (1) umschließende Stirnfläche (7) des Maschinenteils (2) angepreßt ist, wobei die Dichtung (3) der Stützbund (4) und der Ansatz (5) einstückig ineinanderübergehend ausgebildet und aus polymerem Werkstoff erzeugt sind und wobei die Stirnfläche (7) des Maschinenteils (2) mit einer dem Ansatz (5) hinsichtlich der Größe und der Form entsprechenden Ausnehmung (6) versehen ist, dadurch gekennzeichnet, daß der Ansatz (5) durch die durch einen Ringbund (10) der Welle (9) bewirkte Anpressung in seinem Querschnitt erweitert und kraftschlüssig an der die Ausnehmung (6) umschließenden Wandung festgelegt ist und daß der Stützbund (4) mit einem weiteren, einstückig angeformten Ansatz (8) versehen ist, der dem ersten Ansatz (5) axial gegenüberliegt und den Ringbund (10) berührt.

2. Dichtungsanordnung nach Anspruch 1, dadurch gekennzeichnet, daß der Ansatz (5) und die Ausnehmung (6) die Dichtungsachse konzentrisch umschließen.

3. Dichtungsanordnung nach Anspruch 1 bis 2, dadurch gekennzeichnet, daß der Ansatz (5) in seinem der Ausnehmung (6) zugewandten Bereich von geringfügig größerer Weite ist als die Ausnehmung (6).

4. Dichtungsanordnung nach Anspruch 4, dadurch gekennzeichnet, daß der Ansatz (5) von trapezförmigem Profil ist.

5. Dichtungsanordnung nach Anspruch 1 bis 4, dadurch gekennzeichnet, daß der weitere Ansatz (8) von geringerer Länge in axialer Richtung ist als der Ansatz (5).

6. Verwendung einer Dichtungsanordnung nach einem der Ansprüche 1 bis 5, dadurch gekennzeichnet, daß die Welle (9) ein Teil einer Gewindespindel (9) eines Absperrschiebers oder eines Absperrventils für eine Leitung für flüssige oder gasförmige Stoffe ist.

## Claims

1. A sealing arrangement comprising a seal (3), which is fixed in a hole (1) for a rotating shaft (9) in a machine part (2), and a supporting collar (4) of flange-like design on which, extending parallel to the axis of the seal, there is provided a projection (5) which is pressed against the end face (7) of the machine part (2), which end face surrounds the hole (1), in which arrangement the seal (3), the supporting collar (4) and the projection (5) are designed so as to merge integrally into one another and are produced from polymeric material, and the end face (7) of the machine part (2) is provided with a recess (6) corresponding in size and shape to the projection (5), characterised in that by the contact pressure brought about by an annular collar (10) on the shaft (9) the projection (5) is expanded in cross-section and fixed by non-positive engagement on the wall surrounding the recess (6), and in that the supporting collar (4) is provided with a further, integrally formed projection (8), which is situated axially opposite the first projection (5) and touches the annular collar (10).

2. A sealing arrangement according to claim 1, characterised in that the projection (5) and the recess (6) surround the axis of the seal concentrically.

3. A sealing arrangement according to either of claims 1 or 2, characterised in that, in its region facing the recess (6), the projection (5) is of slightly greater width than the recess (6).

4. A sealing arrangement according to claim 3, characterised in that the projection (5) has a trapezoidal profile.

5. A sealing arrangement according to any of claims 1 to 4, characterised in that the further projection (8) is of shorter length in the axial direction than the projection (5).

6. The use of a sealing arrangement according to any of claims 1 to 5, characterised in that the shaft (9) is a part of a threaded spindle (9) of of a shut off slide or a shut-off valve for a conduit for liquid or gaseous substances.

## Revendications

1. Arrangement pour joint d'étanchéité, comprenant un joint (3) qui est fixé dans un alésage (1) d'un organe (2) de machine recevant un arbre (9) rotatif et qui est pourvu d'un collet de support (4) auquel on a donné la forme d'une bride ou collerette, sur laquelle est prévue une saillie (5) qui s'étend parallèlement à l'axe du joint et qui est pressée contre une face frontale (7) de l'organe (2) de machine entourant l'alésage (1), le joint (3), le collet de support (4) et la saillie (5) étant solidaires entre eux et formés d'une seule pièce fabriquée dans une matière polymère, la face frontale (7) de l'organe (2) de machine présentant un creux (6) dont la taille et la forme correspondent à la saillie (5), caractérisé en ce que la saillie (5) est élargie dans sa section grâce à la pression causée par un rebord annulaire (10) de l'arbre (9), et fixée par adhérence contre la paroi entourant le creux (6), et en ce que le collet de rebord (4) est pourvu d'une autre saillie (8) formée par une partie solidaire, qui est située du côté axialement opposé à la première saillie (5) et est en contact avec le rebord annulaire (10).

2. Arrangement pour joint d'étanchéité selon la revendication 1, caractérisé en ce que la saillie (5) et le creux (6) entourent l'axe du joint de manière concentrique.

3. Arrangement pour joint d'étanchéité selon l'une des revendications 1 ou 2, caractérisé en ce que, dans sa zone tournée du côté du creux (6), la saillie (5) a une largeur légèrement supérieure au creux (6).

4. Arrangement pour joint d'étanchéité selon la revendication 4, caractérisé en ce que la saillie (5) a un profil de forme trapézoïdale.

5. Arrangement pour joint d'étanchéité selon les revendications 1 à 4, caractérisé en ce que la deuxième saillie (8) a, dans le sens axial, une longueur inférieure à la saillie (5).

6. Utilisation d'un arrangement pour joint d'étanchéité selon l'une des revendications 1 à 5, caractérisé en ce que l'arbre (9) est une partie d'une broche filetée (9) d'une vanne d'arrêt ou une soupape d'arrêt adaptée pour une conduite pour matières liquides ou gazeuses.
